# EUROPEAN PATENT SPECIFICATION

(11) **EP 2 945 036 B1**
(45) Date of publication and mention of the grant of the patent: **24.10.2018**
(21) Application number: 15164738.5
(22) Date of filing: 22.04.2015
(51) Int. Cl.: G05D 1/00, B64C 13/00, G05D 1/02, G05D 1/08

(54) **SPEED BRAKE ALERTING SYSTEM AND METHOD**
LUFTBREMSENWARNSYSTEM UND -VERFAHREN
SYSTÈME ET PROCÉDÉ D'ALERTE D'AÉROFREIN

(30) Priority: 08.05.2014 US 201414272738
(43) Date of publication of application: 18.11.2015
(73) Proprietor: Honeywell International Inc., Morris Plains, NJ 07950 (US)
(72) Inventor: Johnson, Steve, Morristown, NJ New Jersey 07962-2245 (US); Ishihara, Yasuo, Morristown, NJ New Jersey 07962-2245 (US); Conner, Kevin J, Morristown, NJ New Jersey 07962-2245 (US)
(74) Representative: Houghton, Mark Phillip

(56) References cited:
- EP-A1- 0 042 653
- EP-A1- 0 237 650
- EP-A1- 1 310 848
- WO-A1-02/06908
- WO-A1-98/00334
- FR-A1- 2 908 384
- GB-A- 2 126 184
- GB-A- 2 444 742
- US-A- 4 472 780
- US-A- 5 519 391
- US-A1- 2003 065 428
- US-A1- 2013 184 904

## Description

### TECHNICAL FIELD

The present invention generally relates to aircraft braking systems and methods, and more particularly, to systems and methods for generating signals indicative of the state of an aircraft's speed brakes.

### BACKGROUND

Modern commercial aircraft make extensive use of complex systems for controlling aircraft and managing aircraft operations. For example, such systems may include a flight management system (FMS) that generates flight plans with lateral segments and vertical segments to a landing destination. The flight plans may include details related to the ascent, cruise, descent, and landing modes of a flight. This includes the appropriate use of the aircraft's speed brakes. To suitably understand this, however, it is important to understand what is meant by the terms "speed brake" and "spoiler" since they are often used interchangeably. Simply stated, both employ the same components comprising panels (i.e. spoilers) whose trailing edge is forced upwards (typically using hydraulics) into the airflow passing over the top surface of a wing. The difference resides in the function being performed and the degree to which they are deployed. For example, during descent, the panels may be deployed to, for example, thirty degrees to achieve a steeper descent at the same speed. In this case, the panels may be referred to as "spoilers". During landing, or just prior to touchdown, however, the panels may automatically deploy to as much as sixty degrees to reduce aircraft lift. In this scenario, the panels are commonly referred to as "speed brakes" or "speed brake" and will hereinafter be referred to as such.

As already alluded to, the speed brake plays an important role during the landing process. For example, one of the primary causes of runway overrun is the failure to employ all available stopping devices during landing. However, the speed brake must first be armed, as failure to do so may result in the failure of the speed brake to automatically deploy. Thus, it is important to assure that the speed brake is properly armed. To this end, certain aircraft are equipped with systems that alert the pilot on touchdown that the speed brake has not deployed. Also, some aircraft are equipped to provide a visual alert when the speed brake is armed prior to landing. Unfortunately, the former alert occurs late in the landing process, while the latter occurs earlier, but is a somewhat passive and may not receive appropriate and timely attention in a busy cockpit environment.

In view of the foregoing, it would be desirable to provide improved systems and methods for alerting a flight-crew that the speed brake has not been armed. Furthermore, other desirable features and characteristics of the present invention will become apparent from the subsequent detailed description of the invention and the appended claims, taken in conjunction with the accompanying drawings and this background of the invention.

US2013/184904A1 discloses mechanisms for vehicle operators to reduce risks associated with degraded landing and other situations. Some mechanisms include a display with a visual indicator located within the peripheral field of view of an operator. Aural alerts may also be employed. Information suggesting degradation of, for example, ground deceleration performance may alert the operator to perform unusual or abnormal actions to mitigate hazards produced by the performance degradation.

US2003/065428A1 discloses methods and systems for recording data from an aircraft and alerting with a wireless network. The methods include receiving signals containing data from a plurality of aircraft, determining normal thresholds for the data, monitoring and analyzing the data, and generating an alert signal if the data is beyond the thresholds with a ground based computer terminal in real time.

WO9800334A1 discloses method and apparatus for detecting dormant actuator failure, based upon sensing relatively small delta errors over relative short strokes as opposed to absolute travel error. An actuation system includes an actuator attached to a structure and an element to be moved relative to the structure, the actuator causing movement of the element along a path of travel between travel limits (A and B) relative to the structure and having a failure mode when the actuator has moved more than a fixed distance relative to a reference position on the path of travel, and a processor, coupled to the output signal, from a position transducer, representing a position of the element along the path of travel, for sampling the output signal periodically during the movement and in response producing a signal indicating if a failure mode has occurred.

EP0042653A1 discloses an aircraft spoiler control system wherein each of a plurality of spoilers is driven by an electrically responsive actuator. Sense signals representative of the aircraft's control wheel rotation, speedbrake lever deflection, flap position and air/ground status are processed by logic which produces a corresponding control signal for each actuator. Fault detection circuitry switches in a back-up actuator control signal if a fault occurs in the active control circuit.

GB2126184A discloses a negative climb after take-off warning system. In a ground proximity warning system, a phase of flight signal is derived from signals indicating the aircraft's flight configuration (e.g. gear down, or flaps down) and radio altitude, and means responsive to the phase of flight signal and a signal indicating whether the aircraft is descending with respect to barometric altitude generates a voice warning when the aircraft is losing barometric altitude during a given phase of flight, the nature of the voice warning being varied in dependence on the aircraft's flight configuration.

### BRIEF SUMMARY

The present invention provides a system for reducing aircraft lift during landing, according to claim 1 of the appended claims.

The invention further provides a method for controlling a speed of an aircraft with a speed brake during landing, according to claim 7 of the appended claims.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In accordance with an exemplary embodiment, a system is provided for reducing aircraft lift with a speed brake during landing. The system includes a speed brake control system and a speed brake controller coupled to the speed brake control system for arming the speed brake. An alert generator is coupled to the speed brake controller for generating an alert when the speed brake is not armed.

In accordance with another exemplary embodiment, a method is provided for reducing aircraft lift using a speed brake during landing. The method comprises generating an alert on board the aircraft prior to landing when the speed brake is not armed.

### BRIEF DESCRIPTION OF THE DRAWINGS

Embodiments of the subject matter will hereinafter be described in conjunction with the following drawing figures, wherein like numerals denote like elements, and
FIG. 1 is an isometric view of an aircraft illustrating the location and function of various aircraft control surfaces including the components that comprise an aircraft speed brake;
FIG. 2 is an isometric view of and aircraft wing with a deployed speed brake; and
FIG. 3 is a block diagram of a flight deck control system in accordance with an exemplary embodiment.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, i.e. memory elements, digital signal processing elements, logic elements, look-up tables, or the like, which may carry out a variety of functions under the control of one or more microprocessors or other control devices.

The following description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

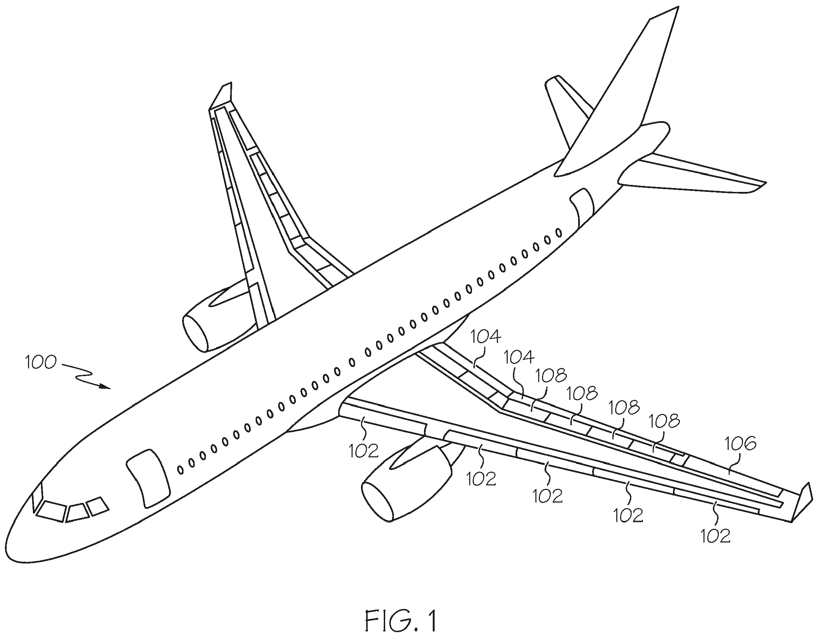

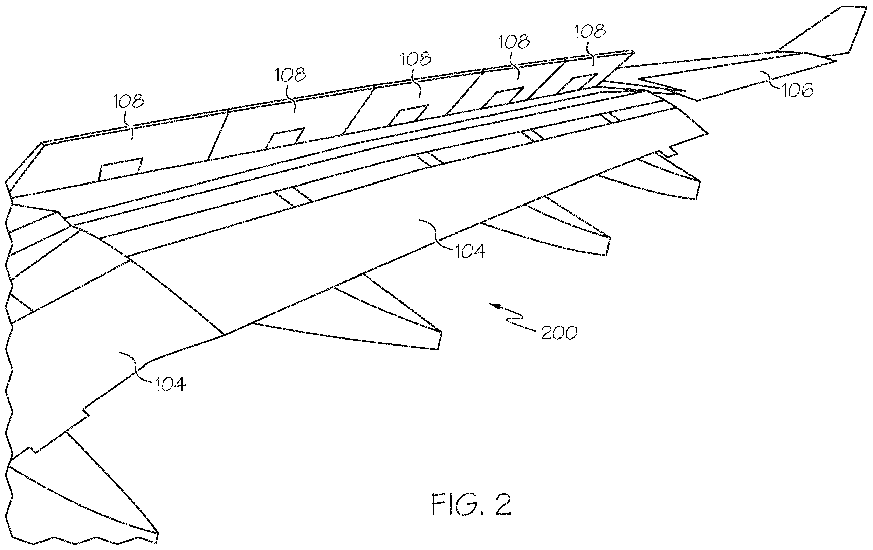

FIG.1 depicts an aircraft **100** including a plurality of flight control surfaces. For example, the leading edge of each wing includes a plurality of slats **102** which, when deployed, allow the wing to operate at a higher angle of attack producing a higher coefficient of lift. Thus, the aircraft can fly at slower speeds or take off and land in shorter distances. Flaps **104,** mounted on the trailing edges of a wing, improve the wing's lift characteristics. An aileron **106** is a hinged flight control surface usually attached to the trailing edge of each wing and is used in pairs to control the aircraft in roll (around the aircraft's longitudinal axis), which normally results in a change in heading due to the tilting of the lift vector. And of primary concern herein, speed brakes (or spoilers) **108,** when used symmetrically on both sides of the aircraft, are used to reduce lift on the wings to achieve a high level of braking. FIG. 2 illustrates an aircraft wing **200** equipped with speed brakes **108** deployed for landing.

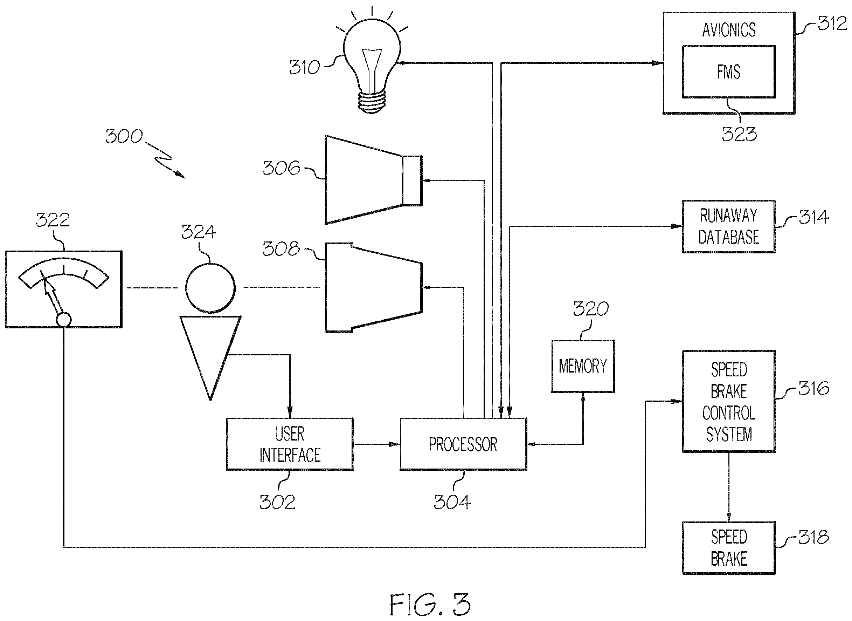

FIG. 3 is a block diagram depicting an exemplary flight deck display system **300** (suitable for a vehicle such as an aircraft) that generally includes, without limitation: a user interface **302;** a processor **304** coupled to the user interface **302;** an aural annunciator **306;** a display element **308;** and a visual indicator **310.** The system **300** may also include, cooperate with, and/or communicate with a number of databases, sources of data, or the like. Moreover, the system **300** may include, cooperate with, and/or communicate with a number of external subsystems as described in more detail below. For example, the processor **304** may cooperate with one or more of the following components, features, data sources, and subsystems, without limitation: a runway database **314;** a speed brake control system **316;** a speed brake **318;** and a manual speed brake actuator **322** (e.g., a lever).

The runway database **314** includes various types of data, including runway location, runway bearing, and runway length. Although the runway database **314** is, for clarity and convenience, shown as being stored separate from processor **304,** all or portions of this database **314** could be loaded into the onboard RAM, stored in ROM, or integrally formed as part of the processor **304.** Runway database **314** could also be part of a device or system that is physically separate from system **300.**

The user interface **302** is in operable communication with the processor **304** and is configured to receive input from a user **324** (e.g., a crew-member) and, in response to the user input, supply command signals to the processor **304.** The user interface **302** may be any one, or combination, of various known user interface devices including, but not limited to, a cursor control device (CCD), such as a mouse, a trackball, or joystick, one or more buttons, switches, or knobs. The user **324** manipulates the user interface **302** to, among other things, move cursor symbols that might be rendered at various times on the display element **308** and to input textual data. As depicted in FIG. 3, the user interface **302** may also be utilized to enable user interaction with avionics system **312** which may include a Flight Management System (FMS) **323** and/or other features and components of the aircraft. A speed brake **318** may be deployed upon receipt of an actuating signal from a speed brake control system **322** (e.g., a lever) operated by a crew-member **324.**

The processor **304** may utilize one or more known general-purpose microprocessors or an application specific processor that operates in response to program instructions. In the depicted embodiment, the processor **304** includes or communicates with onboard memory **320.** The program instructions that control the processor **304** may be stored in RAM and/or ROM in memory **320.** It will be appreciated that this is merely exemplary of one scheme for storing operating system software and software routines, and that various other storage schemes may be implemented. It will also be appreciated that the processor **304** may be implemented using various other circuits, not just a programmable processor. For example, digital logic circuits and analog signal processing circuits could also be used.

Notably, it should be understood that although system **300** appears in FIG. 3 to be arranged as an integrated system, the exemplary embodiments are not so limited and can also include an arrangement whereby one or more of the components are separate components or subcomponents of another system located either onboard or external to an aircraft. Furthermore, the systems and methods are not limited to manned aircraft and can also be implemented for other types of vehicles, such as, for example, spacecraft or unmanned vehicles.

The processor **304** is in operable communication with user interface **302,** aural annunciator **306,** display element **308,** visual annunciator **310** and runway database **314** and is coupled to receive various types of data, information, commands, signals, etc., from the various sensors, data sources, instruments, and subsystems described herein.

In certain embodiments, the processor **304** is configured to respond to data obtained by the onboard sensors to selectively retrieve data from the runway database **314.** The processor **304** also provides appropriate commands to aural annunciator **306** and visual alert **310** as will be described hereinafter. The processor **304** may be further configured to receive real-time (or virtually real-time) airspeed, altitude, attitude, and/or geographic position data for the aircraft.

Position determining systems are suitably configured to obtain geographic position data for the aircraft. The geographic position data obtained may represent the latitude and longitude of the aircraft in an ongoing and continuously updated manner. In general, an avionics suite **312** determines the current kinematic state of the aircraft and may include any suitable position and direction determination devices, such as an inertial reference system (IRS), an air-data heading reference system (AHRS), or a global navigation satellite system (GNSS). For example, the avionics suite **312** provides at least the current position and velocity of the aircraft to a speed brake alerting system. Other aircraft state information may include the current heading, current course, current track, altitude, pitch, and any desired flight information. Global positioning system (GPS) technologies are commonly deployed in avionics applications as a source of aircraft position data.

The user interface **302** may include any suitable hardware and software components that enable the pilot to interface with the system **300.** As particularly shown, a user has access to a speed brake control interface **322** that enables the pilot to engage the speed brake control system **316** directly.

The speed brake control interface **322** is typically a lever that may be pivoted from a first or "not armed" position. From there the lever may be lifted and pivoted to an "armed" position. Finally, the lever may be moved from the armed position to a fully deployed position. Accordingly, the position of the speed brake control interface **322** enables the pilot to apply a selected amount of braking (i.e., drag) to the aircraft. The speed brake control system **316** may provide the speed brake recommendation to display unit **308** for display thereon.

As stated previously, some aircraft are equipped with systems that provide a visual alert when the speed brake is armed prior to landing. However, in accordance with an exemplary embodiment, a system is provided that generates an alert when the speed brake is not armed. Referring again to FIG. 3, processor **304** monitors the state of speed brake **318.** When speed brake **318** is not armed, indicator light **310** is illuminated calling attention to the fact that the speed brake is not armed. The indicator may comprise, for example, a lamp just above the navigation display and/or a text message or symbology on a cockpit system such as the Engine Indicating and Crew Alerting System (EICAS). Also, an audible alert may be generated by annunciator **306,** at a predetermined time prior to landing, at a predetermined altitude above the runway, and/or at a predetermined distance from the runway, if the speed brake has not been armed.

By generating an alert, aural and/or visual, constant or intermittent, when the speed brake is not armed, it is more likely that the status of the speed brake will be observed by a crew-member. Thus, there has been provided an improved system and method for alerting a flight-crew prior to landing that the speed brake has not been armed.

It is important to note that while exemplary embodiments have been described in the context of a fully functioning aircraft system, exemplary embodiments are further capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMs, DVD-ROMs, and transmission-type media, such as digital and analog communications links, wired or wireless communications links using transmission forms, such as, for example, radio frequency and light wave transmissions.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for reducing aircraft lift during landing, the system comprising:
a speed brake control system (316);
a speed brake control interface (322) coupled to the speed brake control system for arming the speed brake (318);
a processor (304) coupled to an avionics suite and coupled to the speed brake control system, and configured to determine when the speed brake (318) is not armed at a predetermined time prior to landing; and
an alert generator coupled to the speed brake control system (316) for generating an alert when the speed brake is not armed at the predetermined time prior to landing.

2. The system of claim 1, wherein the alert generator generates at least one of a visual alert and an audible alert.

3. The system of claim 1, further comprising a runway database (314) coupled to the processor.

4. The system of claim 3, further comprising an avionics suite (312) coupled to the processor.

5. The system of claim 2, wherein the alert generator is further configured to generate an intermittent alert.

6. The system of claim 1, wherein the processor is further configured to determine when either (i) the speed brake is not armed at a predetermined distance from the runway, or (ii) the speed brake is not armed at a predetermined altitude above the runway, and further comprising generating an alert when either (i) the speed brake is not armed at a predetermined distance from the runway, or (ii) the speed brake is not armed at a predetermined altitude above the runway.

7. A method for controlling a speed of an aircraft with a speed brake during landing, comprising generating at least one of a visual alert and an audible alert on board the aircraft prior to landing when the speed brake is not armed at a predetermined altitude above a runway.

8. The method of Claim 7, wherein the step of generating a visual alert comprises rendering symbology on a display prior to landing that graphically represents that the speed brake is not armed.

9. The method of claim 7, further comprising activating a lamp (310) prior to landing.

10. The method of claim 7, wherein the step of generating at least one of a visual alert and an audible alert comprises generating an intermittent alert.

11. The method of claim 7, further comprising determining when either the speed brake is not armed (i) at a predetermined distance from the runway or (ii) at a predetermined time before landing, and further comprising generating the audible alert when the speed brake is not armed (i) at a predetermined distance from the runway or (ii) at a predetermined time before landing.

## Patentansprüche

1. System zum Verringern des Auftriebs eines Flugzeugs während der Landung, wobei das System umfasst:
ein Luftbremsensteuersystem (316);
eine Luftbremsensteuerschnittstelle (322), die mit dem Luftbremsensteuersystem gekoppelt ist, um die Luftbremse (318) scharf zu schalten;
einen Prozessor (304), der mit einem Avioniksystem gekoppelt ist und mit dem Luftbremsensteuersystem gekoppelt ist und der dafür ausgelegt ist zu bestimmen, wenn die Luftbremse (318) zu einem vorbestimmten Zeitpunkt vor der Landung nicht scharf geschaltet ist; und
einen Warnungsgenerator, der mit dem Luftbremsensteuersystem (316) gekoppelt ist, um eine Warnung zu erzeugen, wenn die Luftbremse zu dem vorbestimmten Zeitpunkt vor der Landung nicht scharf geschaltet ist.

2. System nach Anspruch 1, wobei der Warnungsgenerator wenigstens entweder eine visuelle Warnung und/oder eine akustische Warnung erzeugt.

3. System nach Anspruch 1, ferner eine Landebahn-Datenbank (314) umfassend, die mit dem Prozessor gekoppelt ist.

4. System nach Anspruch 3, ferner ein Avioniksystem (312) umfassend, das mit dem Prozessor gekoppelt ist.

5. System nach Anspruch 2, wobei der Warnungsgenerator ferner dafür ausgelegt ist, eine intermittierende Warnung zu erzeugen.

6. System nach Anspruch 1, wobei der Prozessor ferner dafür ausgelegt ist zu bestimmen, wenn entweder (i) die Luftbremse bei einer vorbestimmten Entfernung zur Landebahn nicht scharf geschaltet ist oder (ii) die Luftbremse bei einer vorbestimmten Flughöhe über der Landebahn nicht scharf geschaltet ist, und ferner umfassend, eine Warnung zu erzeugen, wenn entweder (i) die Luftbremse bei einer vorbestimmten Entfernung zur Landebahn nicht scharf geschaltet ist oder (ii) die Luftbremse bei einer vorbestimmten Flughöhe über der Landebahn nicht scharf geschaltet ist.

7. Verfahren zum Regeln einer Geschwindigkeit eines Flugzeugs mittels einer Luftbremse während der Landung, umfassend das Erzeugen wenigstens entweder einer visuellen Warnung und/oder einer akustischen Warnung an Bord des Flugzeugs vor der Landung, wenn die Luftbremse bei einer vorbestimmten Flughöhe über einer Landebahn nicht scharf geschaltet ist.

8. Verfahren nach Anspruch 7, wobei der Schritt des Erzeugens einer visuellen Warnung umfasst, vor der Landung auf einer Anzeige Symbole auszugeben, die grafisch darstellen, dass die Luftbremse nicht scharf geschaltet ist.

9. Verfahren nach Anspruch 7, ferner umfassend, vor der Landung eine Lampe (310) zu aktivieren.

10. Verfahren nach Anspruch 7, wobei der Schritt des Erzeugens wenigstens entweder einer visuellen Warnung und/oder einer akustischen Warnung umfasst, eine intermittierende Warnung zu erzeugen.

11. Verfahren nach Anspruch 7, ferner umfassend zu bestimmen, wenn entweder die Luftbremse (i) bei einer vorbestimmten Entfernung zur Landebahn oder (ii) zu einem vorbestimmten Zeitpunkt vor der Landung nicht scharf geschaltet ist, und ferner umfassend, die akustische Warnung zu erzeugen, wenn die Luftbremse (i) bei einer vorbestimmten Entfernung zur Landebahn oder (ii) zu einem vorbestimmten Zeitpunkt vor der Landung nicht scharf geschaltet ist.

## Revendications

1. Système destiné à réduire la portance d'un aéronef en cours d'atterrissage, le système comprenant :
un système (316) de commande d'aérofrein ;
une interface (322) de commande d'aérofrein couplée au système de commande d'aérofrein, destinée à armer l'aérofrein (318) ;
un processeur (304) couplé à un ensemble avionique et couplé au système de commande d'aérofrein, et configuré pour déterminer lorsque l'aérofrein (318) n'est pas armé à un instant prédéterminé avant l'atterrissage ; et
un générateur d'alerte couplé au système (316) de commande d'aérofrein, destiné à générer une alerte lorsque l'aérofrein n'est pas armé à l'instant prédéterminé avant l'atterrissage.

2. Système selon la revendication 1, dans lequel le générateur d'alerte génère une alerte visuelle et/ou une alerte sonore.

3. Système selon la revendication 1, comprenant en outre une base de données de pistes (314) couplée au processeur.

4. Système selon la revendication 3, comprenant en outre un ensemble avionique (312) couplé au processeur.

5. Système selon la revendication 2, dans lequel le générateur d'alerte est configuré en outre pour générer une alerte intermittente.

6. Système selon la revendication 1, dans lequel le processeur est configuré en outre pour déterminer lorsque soit (i) l'aérofrein n'est pas armé à une distance prédéterminée de la piste, soit (ii) l'aéronef n'est pas armé à une altitude prédéterminée au-dessus de la piste, et comprenant en outre la génération d'une alerte lorsque soit (i) l'aérofrein n'est pas armé à une distance prédéterminée de la piste, soit (ii) l'aéronef n'est pas armé à une altitude prédéterminée au-dessus de la piste.

7. Procédé de commande d'une vitesse d'un aéronef au moyen d'un aérofrein en cours d'atterrissage, comprenant la génération d'une alerte visuelle et/ou d'une alerte sonore à bord de l'aéronef avant l'atterrissage lorsque l'aérofrein n'est pas armé à une altitude prédéterminée au-dessus d'une piste.

8. Procédé selon la revendication 7, dans lequel l'étape de génération d'une alerte visuelle comprend le rendu d'une symbologie sur un affichage avant l'atterrissage, laquelle symbologie indique graphiquement que l'aérofrein n'est pas armé.

9. Procédé selon la revendication 7, comprenant en outre l'activation d'une ampoule (310) avant l'atterrissage.

10. Procédé selon la revendication 7, dans lequel l'étape de génération d'une alerte visuelle et/ou d'une alerte sonore comprend la génération d'une alerte intermittente.

11. Procédé selon la revendication 7, comprenant en outre la détermination lorsque soit l'aérofrein n'est pas armé (i) à une distance prédéterminée de la piste, soit (ii) à un instant prédéterminé avant l'atterrissage, et comprenant en outre la génération de l'alerte audible lorsque l'aérofrein n'est pas armé (i) à une distance prédéterminée de la piste, ou (ii) à un instant prédéterminé avant l'atterrissage.
